# EUROPEAN PATENT APPLICATION

(11) **EP 1 348 529 A1**
(43) Date of publication of application: **01.10.2003**
(21) Application number: 02447044.5
(22) Date of filing: 25.03.2002
(51) Int. Cl.: B29C 33/38, B29C 33/42, B23P 15/24

(54) **Method for making a mould and for producing an elastomeric skin**

(71) Applicant: RECTICEL, 1200 Brussels (BE)
(72) Inventor: De Winter, Hugo Recticel, 9230 Wetteren (BE); Genetello, Mario Recticel, 9230 Wetteren (DE)
(74) Representative: Van Reet, Joseph

(57) **Abstract**

A method for making a mould (26) for producing an elastomeric skin which shows a texture. The required negative of this texture is provided on the mould surface by cutting the desired texture in the liner structure (24) used to form the mould surface; and/or by providing a master model (14) and by making the liner structure as an impression of the master model (14). The master model itself is provided with the desired texture by cutting this desired texture in the master model (14) or by using an elastic sheet material (12) forming the surface of the master model. The desired texture is either cut in the elastic sheet material (12) or the elastic sheet material (12) is made as an impression of a starting material (1) by moulding a flowable impression material having a Brookfield viscosity at application temperature smaller than 100 Pa.s, preferably smaller than 50 Pa.s, or even lower. By the use of such low viscous impression materials, a texture of a better quality can be achieved on the mould surface.

## Description

The present invention relates to a method for making a mould for producing at least an elastomeric skin in particular by a spray, RIM or slush moulding process, which skin shows a front surface having a predetermined texture being an impression of a desired texture, which method comprises the steps of providing a supporting mould structure; and arranging a liner structure on the mould structure to provide a mould surface having a size and a shape corresponding to the size and the shape of the front surface of the elastomeric skin and showing a texture which is a negative of said predetermined texture.

In a method which is used in practice, the liner structure comprises a galvano plate which is made in by electrodepositing nickel in a nickel plating bath or galvano cell onto a bath model. This bath model is made by a number of successive impressions from a master model which has a surface with a size and a shape corresponding to the size and the shape of the mould surface, the master model being more particularly a negative of the mould surface or in other words a positive of the moulded skin. The required texture on the master model is provided by applying an elastic sheet material, showing the required texture, onto a master model structure, more particularly onto a so-called ureol model. The elastic sheet is a thermoplastic PVC film having the required texture embossed thereon according to a so-called "präging" process wherein the film is embossed under pressure by means of an embossing roll. The embossing roll is heated somewhat so that the film is plastically deformed without melting the PVC material. The thus embossed PVC films show an elongation at break of 200 - 250% and a tensile strength of 8 - 14 MPa, both measured according to ISO 527-3/2/100, and a tear resistance of 30 - 55 N/mm, measured according to DIN 53515. In practice the embossed films are produced in large quantities for use in thermo-forming processes, such as deep-drawn processes, to produce for example the elastomeric skin of trim parts for automobiles such as dash boards, glove compartments, consoles, door panels, etc.

A drawback of the above described technique is that the quality of the texture provided on the embossing roll is reduced considerably when transferring the desired texture from the roll to the thermoplastic film. This is for example due to the presence of variations in temperature on the surface of the roll, variations in pressure between the roll and the film, differences in slip between the roll and the film in the axial direction of the roll and possible damages to the roll. In practice, in one particular example of a PVC film embossed with a leather structure, variations in the maximum peak to valley heights R_{z} (measured as an average in accordance with ISO 4287-1997 and ISO 11 562 over a sampling length λ_{c} determined in accordance with ISO 4288-1996 measured in the same location in different areas with a repeating pattern) from 90 to 140 µm (and usually even greater) and variations of the gloss of the film from 1.6 to 2.4 have been observed. Such variations result in a lower quality of the moulds and of the parts produced therein, which consequently have not only worse visual but also worse touch characteristics. A further drawback of the existing technique is that the installation for embossing a thermoplastic film by means of an embossing roll is too expensive for making at the most a few square meters of elastic sheet material required to produce a master model. Moreover, in order to bring the installation to the required process conditions, some hundreds square meters of film have to be produced, most of which is waste material.

EP-A-0 342 473 discloses another method for making a mould for producing an elastomeric skin by a spray process. In this known method the liner structure for the mould is formed by a spray process onto a master model. This European patent application however does not disclose the presence of a texture onto the master model. Moreover, for applying the liner structure onto the mould structure, the liner structure has to be deformed considerably so that, in case a texture would be provided on the master model, this texture would be deformed considerably.

An object of the present invention is therefore to provide a new method for producing a mould which enables to transfer the desired texture with a higher accuracy to the mould surface so that parts with a higher quality, such as better visual and touch characteristics, can be produced in the mould.

To achieve this object the method according to the invention is characterised by the features defined in claim 1.

In this method the desired texture can first of all be cut directly in the liner structure so that no quality is lost at all by any impressions which have to be made. Secondly, use can be made of a master model wherein the desired texture is directly cut. The existing mould making processes enable in this case to make the mould surface with a minimum loss of quality. The existing method for making the mould liner starting from a master model uses indeed a gradual deposition process (nickel plating process) and moulding processes wherein silicone mouldings (impressions) are made in a closed mould so that high quality impressions can be made. Instead of cutting the desired texture in the master model it can be cut in an elastic sheet used to form the surface of the master mould. When starting from a starting material which shows the desired texture or wherein the desired texture is cut to produce the elastic sheet material the loss of quality of the texture is reduced in the method according to the invention compared to the above described existing technique due to the fact that use is made of an impression material for moulding the elastic sheet which is flowable and which has more particularly a Brookfield viscosity of 100 Pa.s or less. The PVC film used in the existing technique becomes on the contrary not flowable but is only heated so that it can be plastically deformed.

The present invention also relates to a method for producing at least an elastomeric skin showing a front surface having a predetermined texture, which method comprises the steps of providing a mould having a mould surface having a size and a shape corresponding to the size and the shape of the front surface of the elastomeric skin and showing a texture which is a negative of said predetermined texture, and producing the elastomeric skin in particular by a spray, RIM or slush moulding process against said mould surface. This method is characterised in that use is made of a mould made in accordance with the above described mould making method according to the invention.

Due to the use of such moulds, elastomeric skins showing a more uniform texture or a texture of a better quality, i.e. a texture which approaches more the desired texture from which the mould making process starts, can be achieved.

The invention moreover relates to a mould for producing at least an elastomeric skin showing a front surface having a predetermined texture, which mould comprises a mould structure and a liner structure arranged in the mould structure providing a mould surface having a size and a shape corresponding to the size and the shape of the front surface of the elastomeric skin and showing a texture which is a negative of said predetermined texture. The mould according to the invention is characterised in that it is made in accordance with a method according to the mould making method of the present invention. As explained already hereabove, such moulds enable to produce elastomeric skins showing a more uniform texture or a texture of a better quality.

Other particularities and advantages of the invention will become apparent from the following description of some particular embodiments of the method and the mould according to the present invention. The reference numerals used in this description relate to the annexed drawings which illustrate the different steps of the mould making process according to a particular embodiment of the invention and wherein:
Figure 1 shows a schematic sectional view on a roll provided with a sleeve of a starting material wherein the desired texture is being cut by means of a laser;
Figure 2 shows a schematic sectional view on a vacuum table wherein the starting material is positioned and wherein an impression material is poured to produce a first impression of the starting material;
Figure 3 is a view similar to Figure 2 wherein the impression material is set to form an elastic sheet material as first impression;
Figure 4 shows a sectional view of the elastic sheet material;
Figure 5 illustrates on a larger scale the quality of the texture on the first impression, i.e. onto the elastic sheet material, when using the prior art "praging" process and the moulding process according to the present invention, the figure illustrating both the contour of the texture onto the starting material and the contour of the texture on the elastic sheet material, the texture on the "praged" prior art PVC film being illustrated in dashed lines;
Figure 6 shows a sectional view of a master model structure, more particularly of a so-called ureol model;
Figure 7 shows the ureol model illustrated in Figure 6 having applied thereon the textured elastic sheet material to form the master model;
Figure 8 illustrates the master model of Figure 7 arranged together with a support shell in a mould to produce an intermediate silicone impression;
Figure 9 illustrates the silicone impression of Figure 8 which is arranged, together with the support shell, in a reversed position in a further mould wherein a gel coat and a glass fibre-epoxy layer are moulded on top of the silicone impression to produce a so-called bath model;
Figure 10 illustrates the bath model immersed in a nickel plating bath wherein a nickel shell is deposited by electric current onto the bath model, and

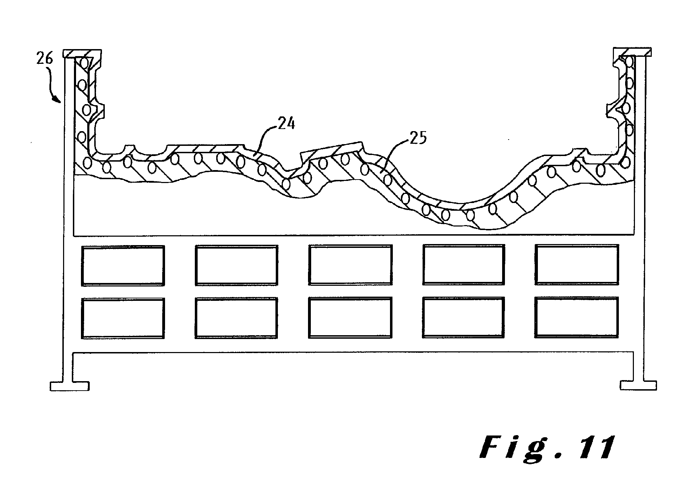

Figure 11 illustrates the nickel shell arranged on a supporting mould structure to produce the mould.

In the method according to the invention illustrated in the figures a desired texture is first of all cut in a starting material 1. The starting material 1 is for example a silicone rubber sleeve or a "Novotek" sleeve which is applied onto a roll 2. By means of a mechanical milling device, but preferably by means of a laser 3 with laser beam 4, the desired texture is cut in the starting material 1. The laser cutting technique is already known per se and disclosed for example in US-A-5 759 473 so that it will be described in great detail. The roll 2 is for example rotated while the laser beam 4 is guided over the peripheral surface parallel to the axis of rotation in such a manner that essentially the entire peripheral surface is treated. During this movement of the laser beam 4 relative to the surface of the roll 2, the intensity of the laser beam 4 is controlled as a function of a control signal which may be obtained by scanning the surface of a patterned original or an artificially designed texture can be developed. In case of an existing texture, for example a leather, wood, stone or any other texture, the surface may be scanned optically or mechanically, and an electric signal is generated in accordance with the scanning results and may be used directly to control the position and intensity of the laser. A preferred alternative consists however in temporarily storing the electric signal obtained by scanning the patterned original. In this way the scanned texture can be processed to modify it.

In the prior art method, the laser cut roll is used to emboss a thermoplastic PVC film at a relatively high output by a continuous calendering process.

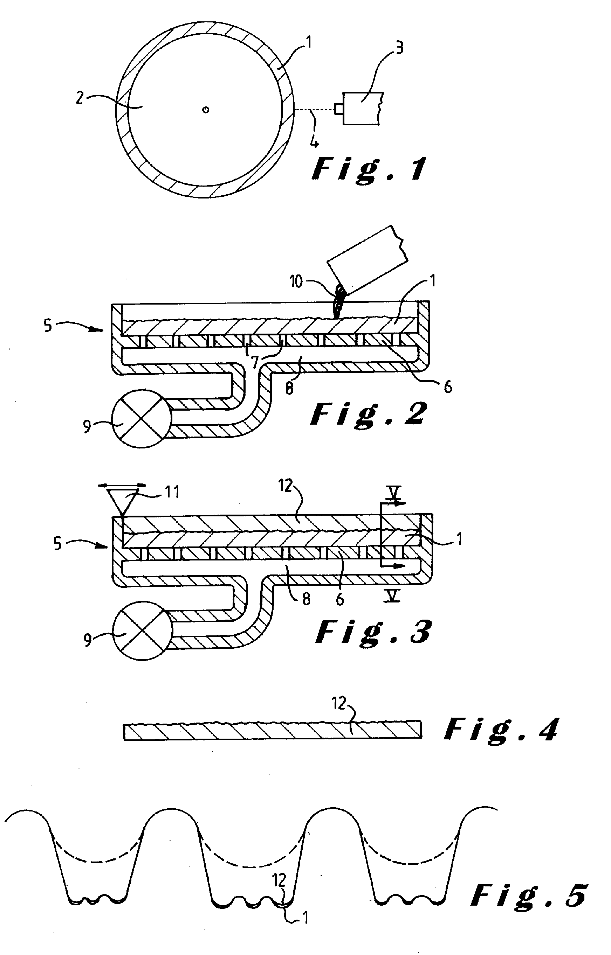

In the method according to the present invention, at the most a few impressions have to be made of the starting material 1, but these impressions have to be of a better quality. As illustrated in Figure 2, the sleeve of starting material 1 can be removed from the roll 2 and positioned in a flat state on a vacuum table 5. This vacuum table 5 has a flat bottom 6 provided with holes 7 ending in a chamber 8 wherein a vacuum is created by means of a vacuum pump 9 so that the sheet of starting material is kept in a flat position. Referring to Figure 3, a flowable impression material 10 is poured in a next step onto the starting material 1 and is scraped off by means of a scraper 11. After having allowed the impression material 10 to set, the sheet material 12 produced thereby is demoulded. This sheet material has for example an average thickness (calculated by dividing its volume by its surface area) of between 20 µm and 5 mm, and preferably between 0.5 mm and 2 mm, and is illustrated in Figure 4.

As impression material for producing the sheet material 12, use is made of a material which produces an elastic sheet material, showing in particular an elongation at break, measured according to ISO 527-3/2/100, of at least 20%, preferably of at least 50% and more preferably of at least 100%. Such an impression material may be a thermoplastic material such as PVC, TPO or TPU, a flowable silicone rubber or a reactive mixture such as a polyurethane reaction mixture composed of an isocyanate and a compound, in particular a polyalcohol or a polyamine, comprising groups which are reactive to the isocyanate compound. An essential feature of the impression material is that, at the temperature at which it is applied onto the starting material, it should have a Brookfield viscosity smaller than 100 Pa.s, in particular smaller than 50 Pa.s, so that it can copy the texture of the starting material sufficiently accurately. The thermoplastic materials should therefore be heated to a sufficiently high temperature and/or contain a sufficient amount of plasticizers in order to be suited for use as impression material. It should be noted that materials with the highest viscosities are in the form of a paste which requires some smearing action and/or some pressure in order to fill the surface relief of the starting material sufficiently completely. The term "flowable material" is therefore to be understood in the present specification as embracing not only materials which can be poured simply by gravity out of a container but also materials to which some pressure has to be applied in order to flow. In the method according to the invention, preference is given to materials which have even a lower viscosity at application temperature, more particularly a Brookfield viscosity smaller than 30 Pa.s, preferably smaller than 20 Pa.s and more preferably smaller than 10 Pa.s. Silicone rubbers, having a viscosity of for example 20 to 25 Pa.s, but especially polyurethane reaction mixtures, having an initial viscosity which is smaller than 10 Pa.s, or even smaller than 5 Pa.s, are preferred.

Examples of suitable polyurethane reaction mixtures can be found in EP-B-0 379 246, especially in Examples 1 to 18 thereof, which are included herein by way of reference. For the present invention, some modifications can be applied to these examples. In view of the fact that for the present invention the curing time is of minor importance, the catalysts could for example be omitted or reduced and less reactive compounds could be used, for example a longer polyol and/or a polyol having a lower functionality, for example a minimum functionality of two, so as to achieve an even more elastic polyurethane. Instead of an aliphatic isocyanate, it is on the other hand possible to use a more reactive aromatic isocyanate.

The advantage of the use of a low viscous impression material, in particular a low viscous reaction mixture, is illustrated in Figure 4. This Figure illustrates the profile of the desired texture cut in the starting material 1 and the profile of the resulting texture on the elastic sheet material moulded on top of the starting material. With a low viscous material less than 5% more particularly only 1 to 3 % of the quality, especially of the maximum peak to valley heights R_{z}, will be lost by making the impression due to the fact that the small recesses of the fine texture will usually not be filled completely. With the existing mechanical embossing process on the contrary, even the larger recesses of the coarse texture will not be completely filled resulting in a considerable loss of quality. In the example illustrated in Figure 5, the fine texture superimposed onto the basic coarser texture is for example completely lost.

In the method according to the invention, a more uniform elastic sheet material can be made on the basis of the laser cut starting material than in the existing calendering process. In case a repeating pattern is provided on the elastic sheet material 12, the maximum peak to valley heights R_{z} (measured as an average in accordance with ISO 4287-1997 and ISO 11 562 over a sampling length λ_{c} determined in accordance with ISO 4288-1996) measured in the same location (where the elastic sheet material shows the same surface profile) in the different areas with repeating pattern vary for example within a range of less than 15%, in particular even less than 10%, above and below the average of the measured peak to valley heights in the different areas. When using such high quality textured sheet materials for making mould for adjoining trim parts, for example for a dash board and for a glove compartment cover or for an air bag, there will be no noticeable contrast between the texture qualities of these parts.

For making the elastic sheet material 12 the flowable impression material 10 can be poured onto the starting material 1 as described hereabove, at least when the impression material shows a sufficiently low viscosity. Instead of pouring the impression material 10, it could also be sprayed, for example by applying the technique disclosed for a polyurethane reaction mixture in EP-B-0 303 305. The impression material could even be sprayed directly onto the roll 2, i.e. without removing the starting material therefrom, so that no vacuum table would be required. When the impression material is more viscous, the textured surface can still be copied sufficiently accurately by smearing the material onto this textured surface. Moreover, also for less viscous materials, it is possible to exert a pressure onto the impression material so that it penetrates even better in the smallest recesses of the textured surface, for example by injecting the flowable material under pressure in a closed mould cavity. Of course, the applied pressure should not be too large to avoid deformations of the textured surface. In practice, a RIM (reaction injection moulding) process should for example be suitable, in particular a polyurethane RIM process.

In the method illustrated in the figures, the elastic sheet material 12 is made as a direct impression of the starting material 1. In a variant embodiment, one or more intermediate impressions could be made by means of impression materials showing the same properties as described hereabove so that the quality of the texture is very little affected by making the different intermediate impressions. Instead of using a starting material 1 wherein the desired texture is cut, it is also possible to start from an existing, in particular natural textured material, such a for example natural leather, a wooden panel, a piece of stone, a solidified sand surface, a metal piece, etc. This textured material can be applied onto the vacuum table or onto another moulding device so that the elastic sheet material 12 can be moulded directly onto this textured material.

In another preferred embodiment, the texture on the elastic sheet material 12 is not provided as an imprint of a starting material but the desired texture is directly cut in the sheet material 12, preferably by means of a laser 3. It is clear that in this way no loss of quality can occur. Cutting the desired texture in the elastic sheet material can be done in the flat or curved state of the sheet material 12 or, in the same way as described for the starting material 1, by making a sleeve of the sheet material 12 and applying it around a roll 2.

In the method illustrated in the figures, the elastic sheet material 12 is used to cover or wrap at least portions of a master model structure 13 in order to achieve a master model 14. If necessary two or more elastic sheets 12 can be made by successive mouldings starting from a same starting material. The master model 14 shows a surface having a size and a shape corresponding to the size and the shape of the surface of the mould to be produced. By a corresponding size and shape is meant in the present specification a size and a shape which are substantially identical to the size and the shape of the mould surface or a size and a shape which are substantially identical to the size and the shape of a negative impression of the mould surface. Consequently, when making the further impressions to achieve the mould surface, no deformations will occur.

When applying the elastic sheet material 12 onto the master model structure 14, it has to be stretched to conform to the shape of this structure, which is possible due to the elastic nature of the elastic sheet material 12.

Instead of making the master model 14 starting from a master model structure 13 and a textured elastic sheet material 12 or pieces thereof, it is also possible to cut the desired texture directly into the master model 14, preferably by means of a laser. In this way no loss of quality can occur in any previous moulding steps. However, the movements which have to be performed by the laser and/or by the master model will be more complex due to the three-dimensional shape of the master model.

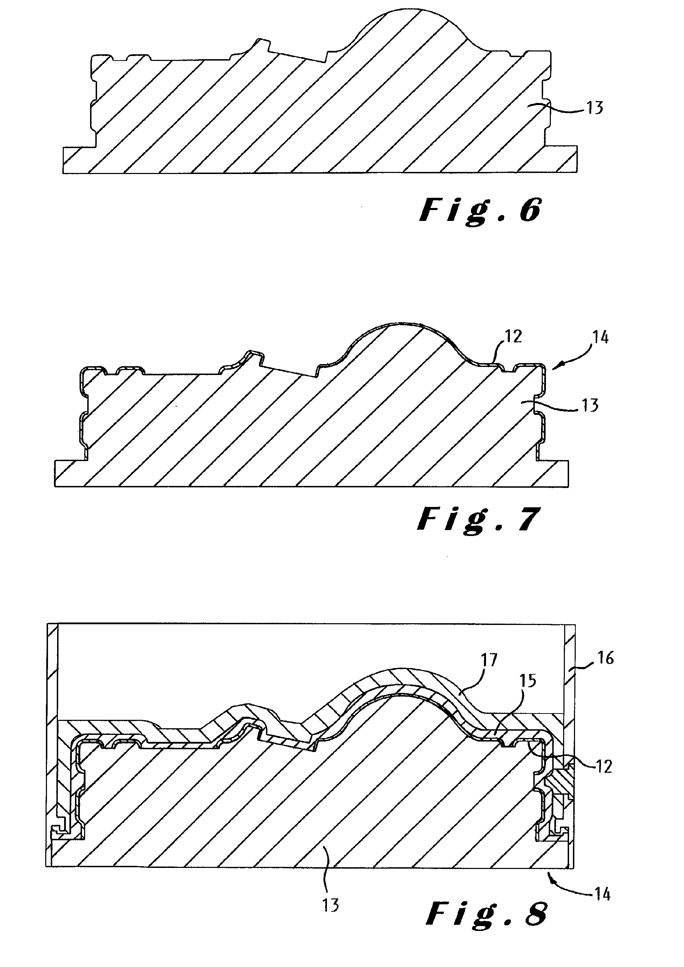

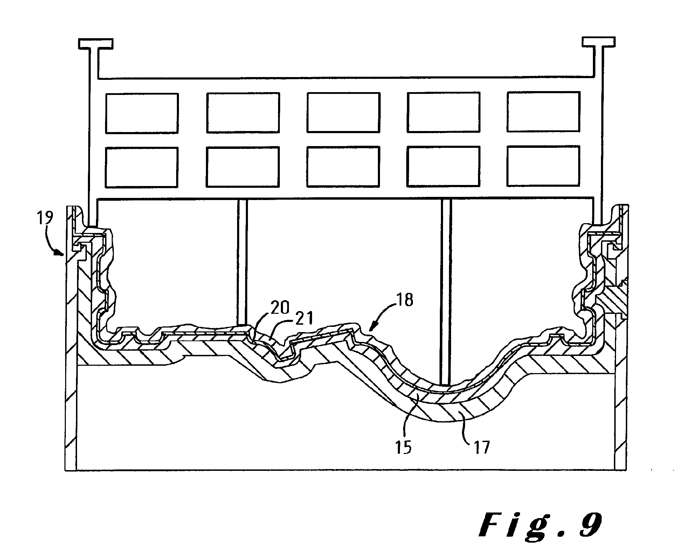

In a next step, illustrated in Figure 8, an intermediate impression is made, more particularly a silicon model 15. The master model 14 is place in this step in a mould 16 and a support shell 17 is positioned on top of the master model 14 so that a mould cavity is formed. This mould is filled with a silicone composition to produce the silicon model 15. As illustrated in Figure 9, this silicon model 15 is used to produce, as a further intermediate impression, a bath model 18. For making this bath model 18, the silicon model 15 is positioned together with the support shell 17 in a further mould 19 and a gel coat layer 20 and a glass fibre reinforced epoxy layer 21 are moulded on top of the silicon model 15.

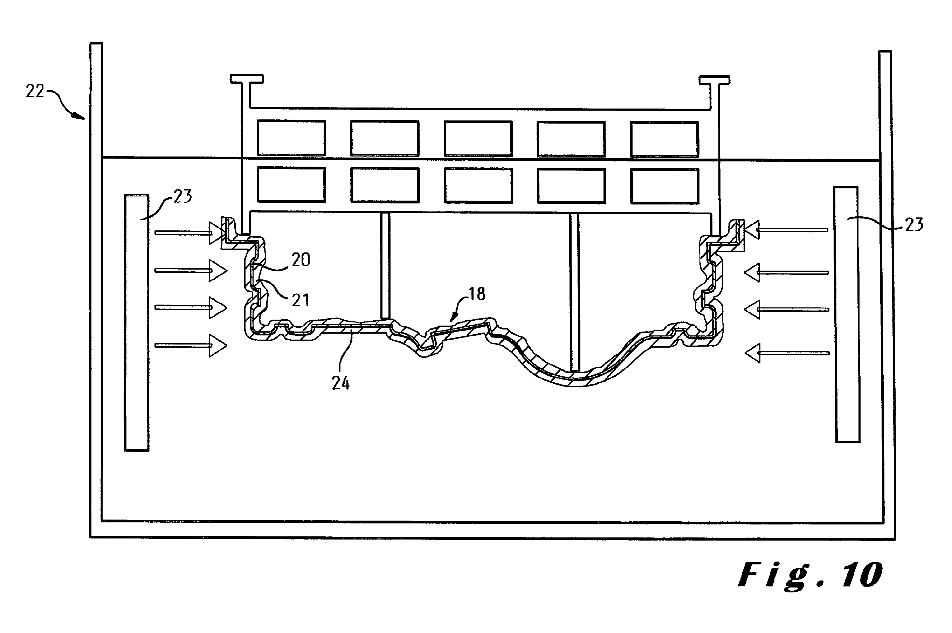

As illustrated in Figure 10, the thus produced bath model 18 is subsequently immersed in an electrolytic bath 22, more particularly in a nickel plating bath or galvanic cell. This bath 22 is filled with an electrolyte solution and two anodes 23 are arranged in the bath. By applying a voltage between the bath model 18 and the anodes 23 an electric current flows in the bath and a metal layer 24, in particular a nickel shell, is gradually deposited onto the bath model 18. This nickel shell 24, showing an imprint of the original desired texture, forms a liner structure which is arranged in a last step onto a supporting mould structure 25 to produce a mould 26, the mould surface of which is formed by the liner structure 24. Instead of using a nickel plating bath, it is also possible to deposit the metal layer onto the bath model by means of a metal vapour deposition process, more particularly by a nickel vapour deposition process. Since such vapour deposition processes are known per se, they will not be described in further detail in the present specification.

In the above described process, the different impressions can be made starting from the master model 14 with such an accuracy that when the master model is provided with a texture showing a repeating pattern, the maximum peak to valley heights R_{z} (measured as an average in accordance with ISO 4287-1997 and ISO 11 562 over a sampling length λ_{c} determined in accordance with ISO 4288-1996) measured in the same location in the different areas with repeating pattern vary within a range of less than 15%, preferably less than 10%, above and below the average of the measured peak to valley heights in the different areas. When the master model is made starting from an elastic sheet which is stretched in certain areas, the maximum peak to valley heights R_{z} have of course to be determined in areas of the mould surface where the elastic sheet was not, or substantially not stretched, since the stretching of the elastic sheet will have an effect on this value. The materials used for making the different intermediate impressions will normally have a viscosity in the same range as the viscosities described hereabove for the impression materials for making the elastic sheet material 12, unless a higher pressure can be used to mould these intermediate impressions. Also the electrolytic or vapour deposition processes produce only a negligible loss of texture quality.

Instead of providing the texture on the master model 14 either by applying a textured elastic sheet material 12 or by cutting the desired texture in the master model 14, the desired texture could also be cut in any of the intermediate impressions, in particular in the silicon model 15 or in the bath model 18, which has then to be considered as the master model in accordance with the definitions given in the annexed claims. On the other hand, further intermediate impressions can be made in order to produce the liner structure 24.

Instead of starting from a textured master model, it is further also possible to cut the desired texture directly into the liner structure 24, and this preferably also be means of a laser. Due to the three dimensional shape of the liner structure 24, this requires more complex movements of the laser and/or of the liner structure. An important advantage is however that no quality loss is produced by making any impressions and that undesired deformations by stretching of an elastic sheet material can be avoided.

Instead of a metal liner structure, it is also possible to make the liner structure from an elastic material. Such an elastic liner is preferably preshaped so that it has a shape and a size corresponding substantially to the shape and the size of the mould surface of the mould obtained when arranging the liner structure onto the mould structure. The liner structure may consist in particular of a rubber membrane, more particularly of a silicone rubber membrane, moulded in accordance with the shape of the mould surface. In such an elastic liner, the desired texture can be cut by means of a laser requiring again more complex movements of liner and/or laser to cut the texture. The use of an elastic liner structure enables however to turn the liner structure, or certain areas thereof, inside out so that concave portions of the liner structure can be reached better by the laser beam. If the elastic liner is elastic enough, it could further be stretched, or at least certain portions thereof to bring the liner into a more regular flat or curved state so that the texture can be cut more easily, in particular by means of the laser.

The moulds made in accordance with the methods described hereabove are used to produce an elastomeric skin by a method wherein a flowable skin material is applied onto the mould surface so that a predetermined texture is formed on the front side of the skin. Examples of such methods are spray processes, RIM processes and powder or liquid slush moulding processes. In the method according to the invention preference is given to a spray or a RIM process wherein a liquid polyurethane reaction mixture is applied onto the mould surface. Compared to slush moulding processes wherein the thermoplastic moulding material has to be heated to a temperature which is generally higher than 200°C and wherein the molten material has subsequently to be cooled down rather quickly, a spray or RIM mould is usually heated to a much lower temperature and does not need to be cooled down so that it is less subjected to thermal stresses. In practice, the mould surface of such moulds can therefore be made of materials which can be given a more accurate or a finer texture.

## Claims

1. A method for making a mould for producing at least an elastomeric skin in particular by a spray, RIM or slush moulding process, which skin shows a front surface having a predetermined texture being an impression of a desired texture, which method comprises the steps of:
- providing a mould structure; and
- arranging a liner structure on the mould structure to provide a mould surface having a size and a shape corresponding to the size and the shape of the front surface of the elastomeric skin and showing a texture which is a negative of said predetermined texture,
**characterised in that** the liner structure is provided with said negative texture:
- by cutting the desired texture in the liner structure; and/or
- by providing a master model showing a surface having a size and a shape corresponding to the size and the shape of said mould surface and by making the liner structure as a direct impression of the master model or as an impression of one or more intermediate impressions of the master model, the direct and any intermediate impressions being made by gradually depositing impression material on the master model and/or on any intermediate impression and/or by a moulding process
wherein a flowable impression material is applied onto the master model and/or onto an any intermediate impression and wherein the flowable impression material is allowed to set to produce the impression, the master model being provided with the desired texture by cutting this desired texture in the master model or an elastic sheet material is applied onto a master model structure to form the surface of the master model, the desired texture being cut in the elastic sheet material before applying it onto the master model structure or the elastic sheet material is made as a direct impression of a starting material or as an impression of one or more intermediate impressions of a starting material, which starting material shows the desired texture or the desired texture being cut in the starting material, the direct and any intermediate impressions being made by a moulding process wherein a flowable impression material having a Brookfield viscosity at application temperature smaller than 100 Pa.s, preferably smaller than 50 Pa.s, is applied onto the starting material and/or on any intermediate impression and wherein the impression material is allowed to set to produce the impression.

2. A method according to claim 1, **characterised in that** the desired texture is cut by means of a laser beam.

3. A method according to claim 1 or 2, **characterised in that** the liner structure is made of an elastic material, in particular of a rubber, according to a shape and a size corresponding substantially to the shape and the size of the mould surface and the desired texture is cut in this liner structure.

4. A method according to claim 1 or 2, **characterised in that** the liner structure is provided with said negative texture by making it as a direct or indirect impression of said master model.

5. A method according to claim 4, **characterised in that** the liner structure is made of a metal or metal alloy which is gradually deposited on the master model or on said or one of said intermediate impressions, in particular by metal plating in an electrolytic cell or by a metal vapour deposition process, the metal being preferably nickel.

6. A method according to claim 4 or 5, **characterised in that** said master model is made by applying said elastic sheet onto the master model structure, the elastic sheet showing an elongation at break, measured according to ISO 527-3/2/100, of at least 20%, preferably at least 50% and more preferably at least 100%.

7. A method according to any one of the claims 4 to 6, **characterised in that** said master model is made by applying said elastic sheet onto the master model structure, the elastic sheet being made by moulding said impression material by spraying, pouring, injecting or smearing it in a layer onto the starting material, the impression material being preferably flowable molten PVC, flowable silicone rubber or a liquid polyurethane reaction mixture, preference being more particularly given to the use of a liquid polyurethane reaction mixture.

8. A method according to any one of the claims 4 to 7, **characterised in that** said master model is made by applying said elastic sheet onto the master model structure, the elastic sheet being made as a direct or indirect impression of said starting material, the impression material or materials used to make said direct and any intermediate impressions having a Brookfield viscosity at application temperature smaller than 30 Pa.s, preferably smaller than 20 Pa.s and more preferably smaller than 10 Pa.s.

9. A method according to any one of the claims 4 to 6, **characterised in that** said master model is made by applying said elastic sheet onto the master model structure, the elastic sheet being provided with the desired texture by cutting this texture in the elastic sheet or in said starting material, the desired texture being preferably cut in the elastic sheet.

10. A method for producing at least an elastomeric skin showing a front surface having a predetermined texture, which method comprises the steps of:
- providing a mould having a mould surface having a size and a shape corresponding to the size and the shape of the front surface of the elastomeric skin and showing a texture which is a negative of said predetermined texture; and
- producing the elastomeric skin in particular by a spray, RIM or slush moulding process against said mould surface,
**characterised in that** use is made of a mould made in accordance with a method according to any one of the previous claims.

11. A method according to claim 10, **characterised in that** the elastomeric skin is produced by applying a polyurethane reaction mixture either by a spray or a RIM process against the mould surface and by allowing the reaction mixture to cure, an in-mould coating, in particular an in-mould paint being optionally first applied against the mould surface.

12. A mould for producing at least an elastomeric skin showing a front surface having a predetermined texture, which mould comprises a mould structure and a liner structure arranged on the mould structure providing a mould surface having a size and a shape corresponding to the size and the shape of the front surface of the elastomeric skin and showing a texture which is a negative of said predetermined texture, **characterised in that** the mould is made in accordance with a method according to any one of the claims 1 to 9.

13. A mould according to claim 12, **characterised in that** the liner structure has a texture showing a repeating pattern, the maximum peak to valley heights R_{z} (measured as an average in accordance with ISO 4287-1997 and ISO 11 562 over a sampling length λ_{c} determined in accordance with ISO 4288-1996) measured in the same location in the different areas with repeating pattern varying within a range of less than 15%, preferably less than 10%, above and below the average of the measured peak to valley heights in the different areas.
